# DEMANDE DE BREVET EUROPEEN

(11) **EP 3 450 221 A1**
(43) Date de publication de la demande: **06.03.2019**
(21) Numéro de dépôt: 18188929.6
(22) Date de dépôt: 14.08.2018
(51) Int. Cl.: B60C 23/00, B60C 23/04, B62J 99/00

(54) **DISPOSITIF DE CONTRÔLE DE PRESSION DE PNEU DE VÉLO ET ROUE DE VÉLO COMPRENANT LEDIT DISPOSITIF**

(30) Priorité: 30.08.2017 FR 1758016
(71) Demandeur: HUTCHINSON, 75008 Paris (FR)
(72) Inventeur: BOUTRU, Pascal, 78150 Le Chesnay (FR); GONNET, Stéphane, 45000 Orléans (FR); BALEZ, Joël, 45200 Amilly (FR); LE GOFF, Clovis, 92300 Levallois-Perret (FR); BENOIST, Jean-Pierre, 45640 Sandillon (FR)
(74) Mandataire: Gevers & Orès

(57) **Abrégé**

L'invention concerne un dispositif (1) de contrôle de pression d'un pneu (102) monté sur une roue de vélo, ledit dispositif comprenant un boîtier (2) configuré de sorte à être logé dans la roue et dans lequel sont agencées :
- une unité de mesure (20) comprenant au moins un capteur capable de mesurer une pression dudit pneu de vélo et de produire un signal indicatif de la valeur de ladite pression,
- une unité de transmission (30) électriquement connectée à ladite unité de mesure (20) et capable de transmettre ledit signal vers un moyen d'affichage externe au dispositif,
- une batterie (40) capable d'alimenter électriquement les différents éléments du dispositif (1),
ledit dispositif étant caractérisé en ce que, ledit boitier (2) comprend une ouverture (4) traversant le boitier (2) d'une face supérieure (f2) du boitier (2) à une face inférieure (f1) du boitier (2), ladite face inférieure (f1) étant opposée à la face supérieure (f2), ladite ouverture (4) présentant au moins une partie s'évasant depuis sa face inférieure (f1) en direction de la face supérieure (f2) de sorte à définir une pente (6) apte à épouser une portée évasée (114) correspondante d'un pied (112) de valve (110) de la roue.

## Description

La présente invention a pour objet un dispositif de contrôle de pression de pneu de vélo ainsi qu'une roue de vélo comprenant ledit dispositif.

La pression des pneus est une variable importante pour la performance d'un cycliste. En effet, une perte de pression peut entraîner un effort supplémentaire de la part du cycliste et ses performances risquent d'être diminuées. Cela est particulièrement vrai pour des cyclistes faisant de la compétition. En outre, une pression d'air extrêmement faible peut conduire à des situations de risque qui peuvent, au pire, provoquer une chute du cycliste.

Il existe plusieurs types de dispositifs de mesure et de contrôle de la pression destinés aux pneus de vélo.

Un premier type de dispositif, externe au pneu, se présente sous la forme d'une tête de valve venant se visser sur la valve de la roue du vélo et communicant la valeur de la pression à un appareil connecté via un émetteur sans fil. Un tel dispositif permet de contrôler la valeur de la pression du pneu, peut être mis en place facilement sur la valve et est compatible à la fois avec des roues avec chambre à air et avec des roues sans chambre à air de type « tubeless ». Cependant, un tel dispositif présente certains inconvénients. Un premier inconvénient est l'aspect inesthétique du dispositif qui est visible à l'extérieur de la roue. De plus, de par son positionnement à l'extérieur du pneu, ce dispositif risque d'être endommagé, en particulier dans le cas d'une utilisation avec un vélo tout terrain. En outre, ce dispositif risque de se faire voler si le vélo est laissé sans surveillance.

Un autre type de dispositif de mesure et de contrôle de la pression destiné aux pneus de vélo consiste en un patch collé sur la chambre à air du pneu. Ledit dispositif est alors maintenu sous pression, au sein du pneu, entre la chambre à air et la jante de la roue. Un tel dispositif n'est compatible qu'avec des roues comportant des chambres à air et non pas avec des roues de type « tubeless ». De plus, un tel dispositif est solidaire de la chambre à air, il est donc impossible de changer de chambre à air sans changer tout ou partie dudit dispositif de contrôle de pression. En outre, le système de fixation d'un tel dispositif n'est pas fiable et ledit dispositif peut se déplacer et perturber ainsi la mesure de la pression.

Il existe également des dispositifs de contrôle de la pression directement intégrés dans la chambre à air ou dans la valve de la chambre à air. Une fois encore, un tel dispositif ne pourra être réutilisé avec une autre chambre à air et n'est pas compatible avec des roues de type « tubeless ».

L'invention a pour objectif de pallier au moins en partie les inconvénients mentionnés plus haut en proposant un dispositif de contrôle de la pression d'un pneu de vélo qui ne soit pas visible à l'extérieur du pneu, présentant un système de fixation fiable et qui puisse être facilement mis en place et remplacé par un utilisateur.

Un autre objet de la présente invention est de fournir un dispositif de contrôle de la pression d'un pneu de vélo qui soit compatible avec tout type de pneu de vélo, avec ou sans chambre à air.

Ainsi, la présente invention concerne un dispositif de contrôle de pression d'un pneu monté sur une roue de vélo, ledit dispositif comprenant un boîtier configuré de sorte à être logé dans la roue et dans lequel sont agencées :
- une unité de mesure comprenant au moins un capteur capable de mesurer une pression (p) dudit pneu de vélo et de produire un signal (s) indicatif de la valeur de ladite pression (p),
- une unité de transmission électriquement connectée à ladite unité de mesure et capable de transmettre ledit signal (s) vers un moyen d'affichage externe au dispositif,
- une batterie capable d'alimenter électriquement les différents éléments du dispositif,
ledit dispositif étant caractérisé en ce que, ledit boitier comprend une ouverture traversant le boitier d'une face supérieure du boitier à une face inférieure du boitier, ladite face inférieure étant opposée à la face supérieure, ladite ouverture présentant au moins une partie s'évasant depuis sa face inférieure en direction de la face supérieure, par exemple conique, de sorte à définir une pente apte à épouser une portée évasée, par exemple conique, correspondante d'un pied de valve de la roue.

Un tel dispositif n'est pas visible à l'extérieur de la roue, présente un système de fixation fiable et peut être facilement mis en place et remplacé par un utilisateur.

L'invention peut également comprendre l'une quelconque des caractéristiques suivantes, prises individuellement ou selon toute combinaison techniquement possible :
- le dispositif comprend au moins un adaptateur logé dans l'ouverture et configuré de sorte à ajuster le diamètre et la pente de ladite ouverture à un autre type de valve,
- l'ouverture sépare le dispositif en deux parties, une première partie accueillant l'unité de mesure et une seconde partie accueillant l'unité de transmission et la batterie,
- le dispositif présente une section en forme en U,
- l'unité de mesure comprend un premier capteur de pression capable de mesurer une pression d'un pneu de vélo avec chambre à air et un deuxième capteur de pression capable de mesurer une pression d'un pneu de vélo sans chambre à air,
- le premier capteur de pression est un capteur de type piézoélectrique et le deuxième capteur de pression est un capteur comprenant une cellule céramique,
- le premier capteur de pression est situé à la surface du boitier, sur la face supérieur du boitier et est recouvert d'une membrane de protection hermétique aux liquides,
- le deuxième capteur de pression est situé à l'intérieur du boitier et est en communication avec l'extérieur du boitier par l'intermédiaire d'un canal, ledit canal débouchant sur la face supérieure du boitier et comportant un gel de protection autorisant le passage de l'air et empêchant le passage de liquides.

L'invention concerne également une roue de vélo comprenant une jante et un dispositif conforme à l'invention caractérisé en ce que, le boitier du dispositif est configuré de sorte à s'inscrire dans le volume interne de la jante.

L'invention peut également comprendre l'une quelconque des caractéristiques suivantes, prises individuellement ou selon toute combinaison techniquement possible :
- le dispositif présente un rayon de courbure inférieur au rayon de courbure de la jante de la roue.

La présente invention sera mieux comprise à la lumière de la description suivante qui n'est donnée qu'à titre indicatif et qui n'a pas pour but de limiter ladite invention, accompagnée des figures suivantes.
- la figure 1 illustre une roue de vélo comprenant un dispositif de mesure de la pression du pneu selon l'invention,
- la figure 2 est un zoom en coupe de la figure 1 au niveau du dispositif selon l'invention,
- la figure 3 est une autre vue du dispositif selon l'invention dans le pneu de la roue de vélo,
- la figure 4 est une vue du dispositif, seul, selon une vue en perspective
- la figure 5 est une autre vue en perspective, partiellement éclatée, du dispositif selon l'invention représenté sur la figure 4,
- la figure 6 est une vue en coupe transversale du dispositif représenté sur la figure 4,
- la figure 7 est une vue en coupe transversale d'un dispositif selon un autre mode de réalisation de l'invention.

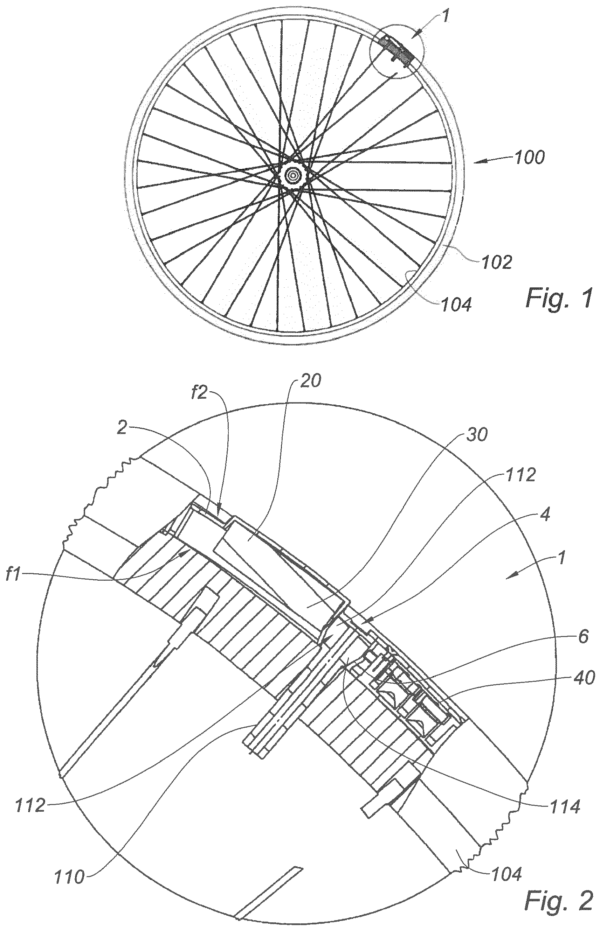

Comme illustré en figure 1, le dispositif 1 de contrôle de pression de pneu 102 de vélo selon l'invention comporte un boitier 2 configuré de sorte à être logé dans une roue 100. Avantageusement, le boitier 2 est configuré de sorte à être logé contre la paroi interne d'une jante 104 de la roue 100. Ainsi, une fois en place, le dispositif 1, recouvert par le pneu, n'est pas visible de l'extérieur et ne risque pas d'être endommagé ou volé.

Comme illustré plus en détail sur la figure 2, le dispositif 1 selon l'invention est avantageusement mis en place au niveau d'une valve 110 de gonflage dudit pneu.

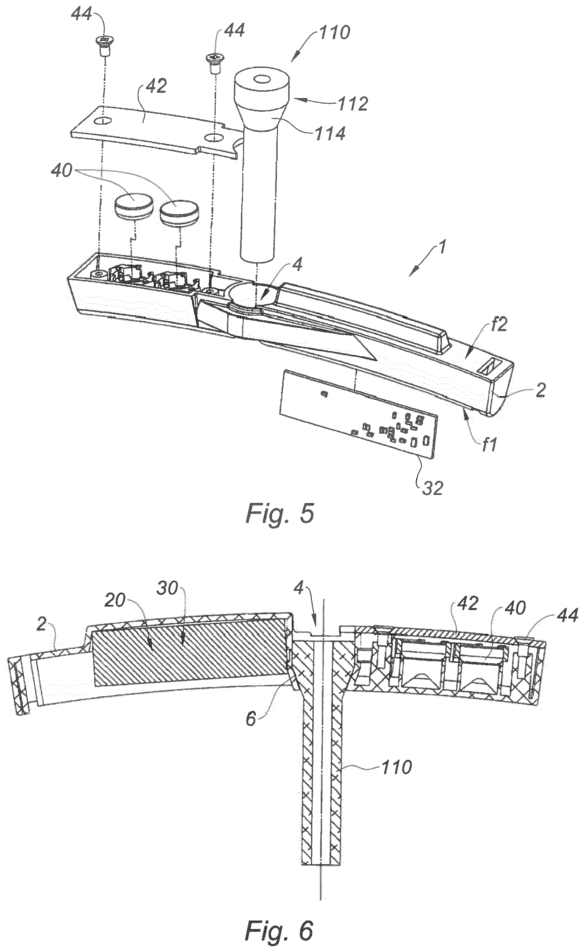

Le boitier 2 comporte une unité de mesure 20 comprenant au moins un capteur capable de mesurer une pression (p) dudit pneu 102 de vélo et de produire un signal (s) indicatif de la valeur de ladite pression (p). Cette unité de mesure 20 est représentée schématiquement aux figures 2 et 6.

Le boitier 2 comporte également une unité de transmission 30 électriquement connectée à ladite unité de mesure 20 et capable de transmettre ledit signal (s) à un moyen d'affichage visible par le cycliste. L'unité de transmission 30 peut notamment comporter à cet effet une carte électronique 32 ainsi que des moyens de communication sans fil avec le moyen d'affichage. Cette unité de transmission 30 est représentée schématiquement aux figures 2 et 6.

Enfin, le boitier 2 comporte une batterie 40 capable d'alimenter électriquement les différents éléments du dispositif 1.

Le boitier 2 peut être constitué de tous matériaux adaptés pour de tels dispositifs, comme notamment des matériaux thermoplastiques.

Avantageusement, le boîtier 2 est hermétique aux liquides mais pas aux gaz.

Le boitier 2 comporte une face inférieure (f1) et une face supérieure (f2) opposée à ladite face supérieure. La face inférieure (f1) est située contre le fond d'une jante 104 de ladite roue 100.

Ledit boitier 2 est configuré de sorte à être fixé de manière réversible au niveau du pied 112 de la valve 110. Ainsi, le dispositif 1 peut être adapté sur une roue 100 existante et retiré si besoin.

Le boîtier 2 comprend une ouverture 4 traversant le boitier 2 entre sa face supérieure (f2) et sa face inférieure (f1) et destinée à accueillir la valve 110. Ainsi, lorsque le dispositif 1 est en place dans la roue 100, la valve 110 de gonflage du pneu 102 est insérée dans ladite ouverture 4 et débouche à l'extérieur du pneu.

Ladite ouverture 4 présente au moins une partie s'évasant depuis la face inférieure (f1) en direction de la face supérieure (f2) de sorte à définir une pente 6. Dans la suite de la description, nous nous baserons sur un cas où la partie évasée de l'ouverture 4 est conique.

Lorsque la valve 110 est fixée à la jante 104, par exemple par l'intermédiaire d'un écrou de valve à l'extérieur la jante, le dispositif 1 est lui aussi fixé à la jante 104. Une fois le dispositif 1 en place dans la roue 100 et la valve 110 fixée, la pression du pneu 102 peut être ajustée en utilisant ladite valve 110 et ce sans retirer le dispositif 1 de la roue 100.

Comme illustré à la figure 5, la valve 110 de gonflage du pneu 102 comporte une première partie, sensiblement de section droite, et une seconde partie, présentant une section dont le diamètre est supérieur au diamètre de la première partie. Cette seconde partie de la valve 110 est appelée pied 112 de la valve 110. C'est ce pied 112 qui vient se loger dans l'ouverture conique 4 du boitier 2 lorsque le dispositif 1 est en place dans la roue 100. Comme on peut le constater sur la figure 5, le diamètre du pied évolue le long du pied 112. La zone du pied 112 de la valve 110 où le diamètre diminue est appelée portée évasée 114 de la valve 110. Dans la suite de la description, nous nous baserons sur un cas où la portée évasée 114 est conique et on parlera donc de portée conique.

Avantageusement, l'ouverture conique 4 sépare le dispositif en deux parties. Une première partie est destinée à accueillir l'unité de mesure 20 et l'unité de transmission 30 et une seconde partie est destinée à accueillir la batterie 40.

La disposition centrale de l'ouverture conique 4 et cette répartition des différentes unités permet de répartir le poids du dispositif 1 par rapport à la zone de fixation située au niveau de l'ouverture conique 4. Ainsi, le dispositif 1 a moins tendance à se déplacer lorsque le vélo est en cours d'utilisation.

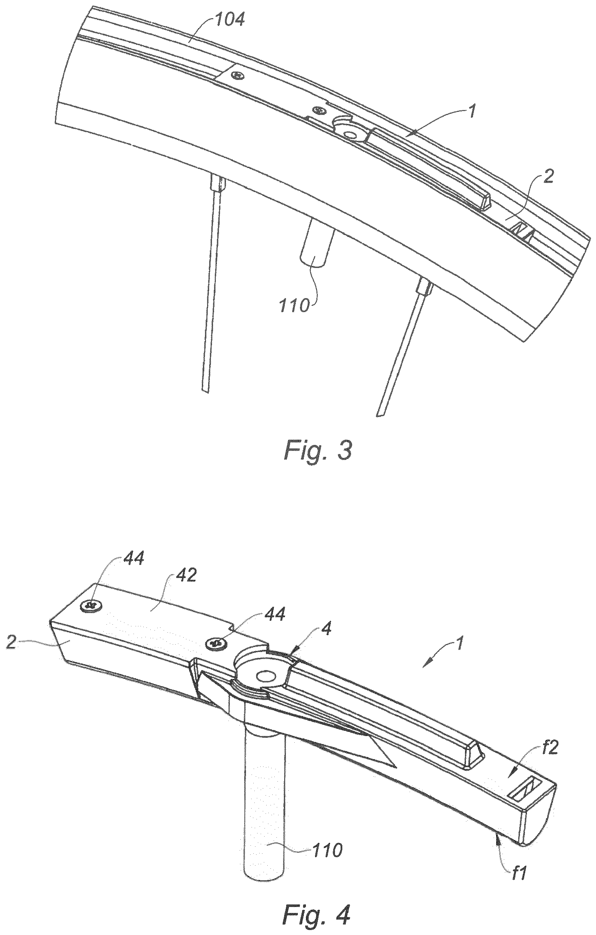

La miniaturisation du dispositif 1 est également un objectif de la présente invention. En effet, comme illustré à la figure 3, le boitier 2 du dispositif 1 est avantageusement configuré de sorte à s'inscrire dans le volume interne du pneu, délimité par la jante 104 lorsque le dispositif 1 est en place dans la roue 100.

Ainsi, dans le cas où le pneu 102 venait à perdre trop de pression, le dispositif 1 est protégé par les flancs de la jante 104 et ne risque pas d'être endommagé.

La face inférieure f1 du dispositif 1 présente avantageusement une forme en U. Cette forme particulière permet au dispositif 1 de s'adapter de façon optimale au fond de la jante 104 et de diminuer ainsi l'encombrement du dispositif 1.

Les figures 4 à 6 représentent le dispositif 1 en dehors de la roue 100. Avantageusement, le dispositif 1 peut présenter des nervures latérales de rigidification.

Comme illustré à la figure 5, la batterie 40 est accessible par l'intermédiaire d'un couvercle 42 amovible. Ledit couvercle peut notamment être fixé par l'intermédiaire de vis 44.

Avantageusement, la batterie 40 est constituée d'une ou plusieurs piles. Ainsi, l'utilisateur peut lui-même remplacer la batterie 40 du dispositif 1 et ce sans avoir recours à une manipulation complexe.

Après avoir remplacé la batterie 40 du dispositif 1, l'utilisateur referme le couvercle 42 de la batterie 40. Avantageusement, le boitier 2, une fois refermé, est hermétique aux liquides.

Comme illustré à la figure 6, le diamètre de l'ouverture conique 4 au niveau de la face inférieure (f1) est plus faible que le diamètre de ladite ouverture au niveau de sa face supérieure (f2). Ladite ouverture 4 présente donc au moins une partie s'évasant depuis la face inférieure (f1) du boitier 2 en direction de la face supérieure (f2) du boitier 2 de sorte à définir une pente 6. Cette pente 6 est apte à épouser une portée conique 114 correspondante d'un pied 112 de valve 110 de la roue 100.

Cette complémentarité de forme entre le pied 112 de la valve 110 et l'ouverture conique 4 du dispositif 2 permet une fixation fiable dudit dispositif 1 dans la roue 100.

Avantageusement, le pied 112 de la valve 110 est en caoutchouc. Dans ce cas, l'interaction entre le caoutchouc du pied 112 de la valve 110 et la matière thermoplastique du boitier 2 permet de limiter les vibrations.

Il existe différent type de valve en fonction du type de roue. Toutes les valves n'ont pas nécessairement la même taille ou la même forme. Ainsi, l'ouverture conique 4 est configurée de sorte à pouvoir accueillir une valve 110 de taille standard maximale.

Avantageusement, le dispositif 1 comprend au moins un adaptateur 8 logé dans l'ouverture conique 4 et configuré de sorte à ajuster le diamètre et la pente 6 de ladite ouverture conique 4 à un autre type de valve 110. Encore avantageusement, le dispositif 1 comprend un adaptateur 8 pour chaque type de valve 110 disponible sur le marché.

Ainsi, quel que soit le type de valve 110 associée à la roue 100, le dispositif 1 présentera, par l'intermédiaire de l'adaptateur 8, une ouverture conique 4 ayant une forme complémentaire à celle de la valve 110. L'adaptateur 8 n'est pas représenté sur les figures.

Avantageusement, le dispositif 1 est légèrement courbé dans le sens de la longueur. Ainsi, comme illustré à la figure 6, le dispositif 1 présente un rayon de courbure.

Encore avantageusement, le dispositif 1 présente un rayon de courbure inférieur au rayon de courbure de la jante 104. En pratique, la rayon de courbure sera inférieur au rayon de courbure du plus petit modèle de jante classique, par exemple une jante de 26 pouces. Ainsi, quel que soit le modèle de jante du vélo de l'utilisateur, la dispositif présentera un rayon de courbure inférieur à celui de la jante.

En présentant un rayon de courbure inférieur à celui de la jante 104, le dispositif 1 présente une légère force de résistance lorsqu'il est placé dans la roue 100. Cette résistance permet de maintenir un bon contact entre le boitier 2 du dispositif 1 et le fond de la jante 104, ce qui contribue à la fiabilité de la fixation du dispositif 1 dans la roue 100.

Un dispositif 1 tel que décrit ci-dessus n'est pas visible à l'extérieur de la roue 100, présente un système de fixation simple, fiable et peut être facilement mis en place et remplacé par un utilisateur.

Un autre objet de l'invention est de fournir un dispositif 1 de contrôle de la pression d'un pneu 102 de vélo qui soit compatible avec tout type de roue de vélo, avec ou sans chambre à air.

En effet, un même capteur de pression n'est pas nécessairement compatible avec tout type de roue. Selon le type de roue utilisé, la technologie de mesure de la pression est différente.

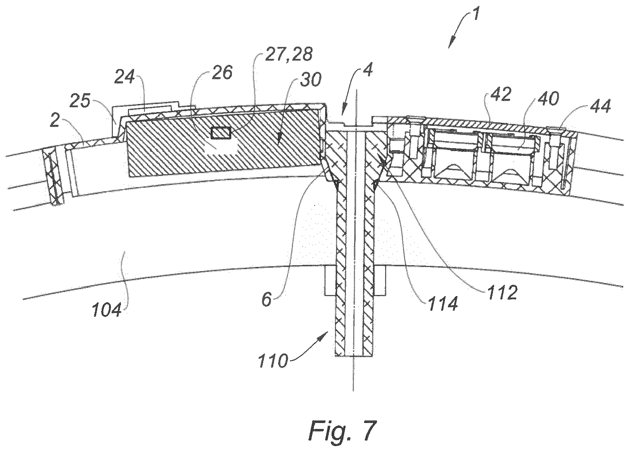

Comme illustré à la figure 7, selon un mode de réalisation de l'invention, l'unité de mesure 20 du dispositif 1 comprend deux capteurs de pression différents. Un premier capteur 24 de pression est capable de mesurer une pression d'un pneu 102 de vélo avec chambre à air et un deuxième capteur 26 de pression est capable de mesurer une pression d'un pneu 102 de vélo sans chambre à air. La présence de deux types de capteurs différents dans un même dispositif 1 de contrôle de pression de pneu 102 de vélo permet d'étendre l'utilisation dudit dispositif 1 à tous types de roues 100.

Le premier capteur 24 de pression est un capteur de type piézoélectrique et le deuxième capteur 26 de pression est un capteur comprenant une cellule céramique.

Avantageusement, le premier capteur 24 de pression est situé à la surface du boitier 2, sur la face supérieure (f2) du boitier 2. Comme visible sur les figures 3 à 6, le boitier 2 du dispositif 1 peut présenter une partie saillante par rapport à la face supérieure (f2). C'est avantageusement à la surface de cette partie saillante qu'est positionné le premier capteur 24 de pression.

Ainsi, lorsque le dispositif 1 est utilisé avec une roue 100 présentant une chambre à air, ladite chambre à air vient en appuis contre la face supérieure (f2) du dispositif 1, avantageusement contre sa partie saillante, et donc contre le capteur piézoélectrique 24. Ledit capteur piézoélectrique 24 permet ainsi de mesurer la pression du pneu de vélo.

Encore avantageusement, le premier capteur 24 est recouvert d'une membrane 25 de protection hermétique aux liquides. Cette membrane 25 permet de protéger le premier capteur 24 des liquides notamment lorsque le dispositif est utilisé dans une roue sans chambre à air de type « tubeless ». En effet, les roues de type « tubeless » nécessitent l'utilisation de liquide préventif lors de leur installation. Lorsque le pneu est mis en place sur la jante, un liquide est introduit dans le volume interne du pneu de manière à éviter les crevaisons. Ce liquide peut alors venir au contact d'un dispositif de contrôle de pression de pneu et éventuellement détériorer le capteur de pression.

La membrane de protection permet ainsi d'utiliser le dispositif 1 dans tout type de roues 100.

Le deuxième capteur 26 de pression est situé à l'intérieur du boitier 2 et est en communication avec l'extérieur du boitier par l'intermédiaire d'un canal 27 débouchant au niveau de la face supérieure (f2) du boitier 2.

Ledit canal 27 comporte un gel 28 de protection autorisant le passage de l'air et empêchant le passage de liquides.

Le dispositif peut également comprendre un accéléromètre afin d'activer le dispositif 1 lorsque la roue 100 est en mouvement ce qui permet d'économiser la batterie 40 et la durée de vie du dispositif 1.

Enfin, l'unité de mesure 20 peut être est configurée de sorte à effectuer une mesure de la pression à différentes fréquences, ladite fréquence de mesure étant variable en fonction du type d'utilisation du vélo.

Par exemple, une première fréquence de mesure peut correspondre au montage du dispositif sur la roue du vélo. Cette fréquence sera relativement élevée.

Une deuxième fréquence de mesure peut correspondre au réglage de la pression du pneu 102.

Une troisième fréquence de mesure peut correspondre à l'utilisation du vélo. Cette fréquence sera relativement faible par rapport aux autres fréquences.

Un autre objet de l'invention est une roue 100 de vélo comprenant une jante 104 et le dispositif 1 décrit plus haut. Cette roue 100 est illustrée à la figure 1.

Le boitier 2 du dispositif 1 de la roue 100 est configuré de sorte à s'inscrire dans le volume interne de la jante 104 de ladite roue 100.

Avantageusement, le dispositif 1 de la roue 100 présente un rayon de courbure inférieur au rayon de courbure de la jante 104 de ladite roue 100.

## Revendications

1. Dispositif (1) de contrôle de pression d'un pneu (102) monté sur une roue (100) de vélo, ledit dispositif comprenant un boîtier (2) configuré de sorte à être logé dans la roue (100) et dans lequel sont agencées :
- une unité de mesure (20) comprenant au moins un capteur capable de mesurer une pression (p) dudit pneu de vélo et de produire un signal (s) indicatif de la valeur de ladite pression (p),
- une unité de transmission (30) électriquement connectée à ladite unité de mesure (20) et capable de transmettre ledit signal (s) vers un moyen d'affichage externe au dispositif,
- une batterie (40) capable d'alimenter électriquement les différents éléments du dispositif (1),
ledit dispositif étant **caractérisé en ce que**, ledit boitier (2) comprend une ouverture (4) traversant le boitier (2) d'une face supérieure (f2) du boitier (2) à une face inférieure (f1) du boitier (2), ladite face inférieure (f1) étant opposée à la face supérieure (f2), ladite ouverture (4) présentant au moins une partie s'évasant depuis sa face inférieure (f1) en direction de la face supérieure (f2), par exemple conique, de sorte à définir une pente (6) apte à épouser une portée évasée (114), par exemple conique, correspondante d'un pied (112) de valve (110) de la roue (100).

2. Dispositif (1) de contrôle de pression selon la revendication précédente **caractérisé en ce que**, le dispositif (1) comprend au moins un adaptateur (8) logé dans l'ouverture (4) et configuré de sorte à ajuster le diamètre et la pente (6) de ladite ouverture (4) à un autre type de valve (110).

3. Dispositif (1) de contrôle de pression selon l'une des revendications précédentes **caractérisé en ce que**, ladite ouverture (4) sépare le dispositif (1) en deux parties, une première partie accueillant l'unité de mesure (20) et une seconde partie accueillant l'unité de transmission (30) et la batterie (40).

4. Dispositif (1) de contrôle de pression selon l'une des revendications précédentes **caractérisé en ce qu'**il présente une section en forme de U.

5. Dispositif (1) de contrôle de pression selon l'une des revendications précédentes **caractérisé en ce que**, l'unité de mesure (20) comprend un premier capteur (24) de pression capable de mesurer une pression d'un pneu (102) de vélo avec chambre à air et un deuxième capteur (26) de pression capable de mesurer une pression d'un pneu (102) de vélo sans chambre à air.

6. Dispositif (1) de contrôle de pression selon la revendication précédente **caractérisé en ce que**, le premier capteur (24) de pression est un capteur de type piézoélectrique et le deuxième capteur (26) de pression est un capteur comprenant une cellule céramique.

7. Dispositif (1) de contrôle de pression selon l'une des revendications 5 à 6 **caractérisé en ce que**, le premier capteur (24) de pression est situé à la surface du boitier (2), sur la face supérieur (f2) du boitier (2) et est recouvert d'une membrane (25) de protection hermétique aux liquides.

8. Dispositif (1) de contrôle de pression selon l'une des revendications 5 à 7 **caractérisé en ce que**, le deuxième capteur (26) de pression est situé à l'intérieur du boitier (2) et est en communication avec l'extérieur du boitier (2) par l'intermédiaire d'un canal (27), ledit canal (27) débouchant sur la face supérieure (f2) du boitier (2) et comportant un gel (28) de protection autorisant le passage de l'air et empêchant le passage de liquides.

9. Roue (100) de vélo comprenant une jante (104) et un dispositif (1) selon l'une des revendications précédentes **caractérisé en ce que**, le boitier (2) du dispositif (1) est configuré de sorte à s'inscrire dans le volume interne de la jante (104).

10. Roue (100) de vélo selon la revendication 9 **caractérisé en ce que**, le dispositif (1) présente un rayon de courbure inférieur au rayon de courbure de la jante (104) de la roue (100).
